# EUROPEAN PATENT SPECIFICATION

(11) **EP 2 199 579 B1**
(45) Date of publication and mention of the grant of the patent: **15.10.2014**
(21) Application number: 09178470.2
(22) Date of filing: 09.12.2009
(51) Int. Cl.: F02D 41/06, F02D 37/02, F02P 5/04, F02P 5/15, F02D 41/08

(54) **Controller of internal combustion engine**
Steuereinrichtung für Verbrennungsmotor
Équipement de commande pour moteur à combustion interne

(30) Priority: 11.12.2008 JP 2008315736
(43) Date of publication of application: 23.06.2010
(73) Proprietor: TOYOTA JIDOSHA KABUSHIKI KAISHA, Toyota-shi, Aichi-ken, 471-8571 (JP)
(72) Inventor: Nakamura, Yoshifumi, Toyota-shi, Aichi-ken, 471-8571 (JP); Yoshihara, Masatomo, Toyota-shi, Aichi-ken, 471-8571 (JP); Uchida, Akito, Toyota-shi, Aichi-ken, 471-8571 (JP); Okamura, Koji, Toyota-shi, Aichi-ken, 471-8571 (JP); Hatta, Yuuji, Toyota-shi, Aichi-ken, 471-8571 (JP); Masuda, Satoshi, Kariya-shi, Aichi-ken, 448-8661 (JP)
(74) Representative: Winter, Brandl, Fürniss, Hübner, Röss, Kaiser, Polte - Partnerschaft mbB

(56) References cited:
- EP-A1- 1 288 493
- EP-A1- 1 450 039
- JP-A- 2001 304 084
- JP-A- 2002 168 168
- JP-A- 2008 157 142
- JP-A- 2008 232 066
- JP-A- 2009 036 045
- US-A- 5 027 771
- US-A1- 2001 010 149
- US-A1- 2004 144 358
- US-A1- 2005 145 217
- US-B1- 6 505 464

## Description

The present invention relates to a controller of an internal combustion engine that controls the ignition timing when the engine is started.

Such an internal combustion engine controller is disclosed in Japanese Laid-Open Patent Publication No. 2001-304084. To prevent the speed of an engine from being excessively increased when the engine is started, a typical engine controller delays the ignition timing relative to idling ignition timing of the engine if the engine speed NE becomes greater than or equal to a start determination speed NEstrt.

To prevent the engine speed from being excessively lowered while ignition timing retarding control is being executed, one such controller ends the ignition timing retarding control and executes ignition timing advancing control on condition that the engine speed NE is lower than or equal to an idling target speed NEidle and the difference ΔNE ΔNE = NEidle - NE) becomes greater than or equal to a predetermined value ANEstp.

Conventionally, the predetermined value ΔNEstp for stopping the ignition timing retarding control is set based on a state where the engine is started normally, that is, a state where the engine temperature is relatively low (for example, a temperature corresponding to a range from ΔNEstp to a few tens of rpm). Also, the degree of advancement in the ignition timing advancing control is set based on a normal engine starting state, that is, on a state where the engine temperature is relatively low.

On the other hand, in an engine that is restarted in response to a restarting command after being automatically stopped, the engine temperature is relatively high and the friction in the engine is small when the engine is restarted. Therefore, even if the ignition timing retarding control is executed, the engine speed NE is likely to be excessively increased. Accordingly, in order to prevent the engine speed NE from being excessively increased when the engine is restarted, fuel injection may be stopped if the engine speed NE becomes greater than or equal to a predetermined speed NEhg, which is greater than the idling target speed NEidle.

However, in this case, when fuel injection is restarted to restart the engine, the engine speed NE is likely to be excessively lowered due to the influence of the most recent stopping of fuel injection. The predetermined value ΔNEstp for stopping the ignition timing retarding control is set to a small value in accordance with a state where the engine temperature is relatively low. Accordingly, when the engine speed NE becomes less than or equal to the idling target speed NEidle, and the difference ΔNE becomes greater than or equal to the predetermined value ΔNEstp, the ignition timing retarding control is stopped at too early a stage, and the ignition timing advancing control is executed. Therefore, when the engine is restarted, the engine power is increased at too early a stage, and the engine speed NE is likely to be excessively increased.

Also, even if the ignition timing retarding control is not stopped at too early a stage, the similar problem can occur. That is, the degree of advancement in the ignition timing advancing control is set to a relatively great value in accordance with a state where the engine temperature is relatively low. In this case, the degree of advancement in relation to the engine temperature is excessively great when the engine is restarted, the engine speed NE may be excessively increased.

Thus, in either case, the engine speed is likely to excessively increased when the ignition timing retarding control is switched to the ignition timing advancing control.

Such a problem is not limited to engine controllers that execute restarting of the engine, but also occurs in any configuration in which the ignition timing of an engine at the start of the engine is retarded relative to the idling igniting timing, and the ignition timing retarding control is stopped and the ignition timing is advanced when, during the ignition timing retarding control, the engine speed becomes less than or equal to the idling target engine speed and the difference between the engine speed and the idling target engine speed becomes greater than or equal to a predetermined value.

Document US2005-0045217 A1 shows an internal combustion engine controller for preventing an engine speed from abruptly increasing to an excessively high speed right after engine start according to the preamble of independent claim 5 of the present invention.

### SUMMARY OF THE INVENTION

Accordingly, it is an objective of the present invention to provide an internal combustion engine controller that is capable of preventing the engine speed from being excessively increased when the ignition timing retarding control is switched to the ignition timing advancing control at the start of the engine.

To achieve the foregoing and in accordance with a first aspect of the present invention, a controller of an internal combustion engine is provided. The controller includes ignition timing control means and fuel injection control means. At the start of the engine, the ignition timing control means executes ignition timing retarding control for retarding the ignition timing in relation to idling ignition timing of the engine. When the ignition timing retarding control is being executed, the ignition timing control means stops the ignition timing retarding control and executes ignition timing advancing control for advancing the ignition timing on condition that the engine speed becomes less than or equal to an idling target speed and the degree of difference between the engine speed and the idling target speed becomes greater than or equal to a predetermined degree. When the engine temperature is higher than or equal to a predetermined temperature at the start of the engine, the fuel injection control means stops fuel injection on condition that the engine speed becomes greater than or equal to a predetermined speed. If the engine temperature is higher than or equal to the predetermined temperature at the start of the engine, the ignition timing control means sets the predetermined degree for stopping the ignition timing retarding control to a greater value than in a case where the engine temperature is lower than the predetermined temperature.

In accordance with a second aspect of the present invention, a controller of an internal combustion engine is provided. The controller includes ignition timing control means. At the start of the engine, the ignition timing control means executes ignition timing retarding control for retarding the ignition timing in relation to idling ignition timing of the engine. When the ignition timing retarding control is being executed, the ignition timing control means stops the ignition timing retarding control and executes ignition timing advancing control for advancing the ignition timing on condition that the engine speed becomes less than or equal to an idling target speed and the degree of difference between the engine speed and the idling target speed becomes greater than or equal to a predetermined degree. If the engine temperature is high at the start of the engine, the ignition timing control means sets the degree of advancement in the ignition timing advancing control to a smaller value than in a case where the engine temperature is low.

### BRIEF DESCRIPTION OF THE DRAWINGS

Fig. 1 is a block diagram showing an engine that uses an internal combustion engine controller according to a first embodiment of the present invention, and the controller;
Fig. 2 is a flowchart showing a procedure of throttle opening degree control executed while the engine idling;
Fig. 3 is a flowchart showing a procedure of fuel injection control executed while the engine idling;
Fig. 4 is a flowchart showing a procedure of ignition timing control executed while the engine idling;
Fig. 5 is a flowchart showing a procedure for setting a predetermined value for stopping the ignition timing retarding control;
Fig. 6 is a flowchart showing a procedure for setting a predetermined degree in the ignition timing advancing control;
Fig. 7(a) is a timing chart showing changes of the engine speed when the ignition timing control is executed in a state where the coolant temperature is lower than predetermined temperature; and
Fig. 7(b) is a timing chart showing changes of the engine speed when the ignition timing control is executed in a state where the coolant temperature is higher than predetermined temperature.

### DETAILED DESCRIPTION OF THE PREFERRED EMBODIMENTS

### <First Embodiment>

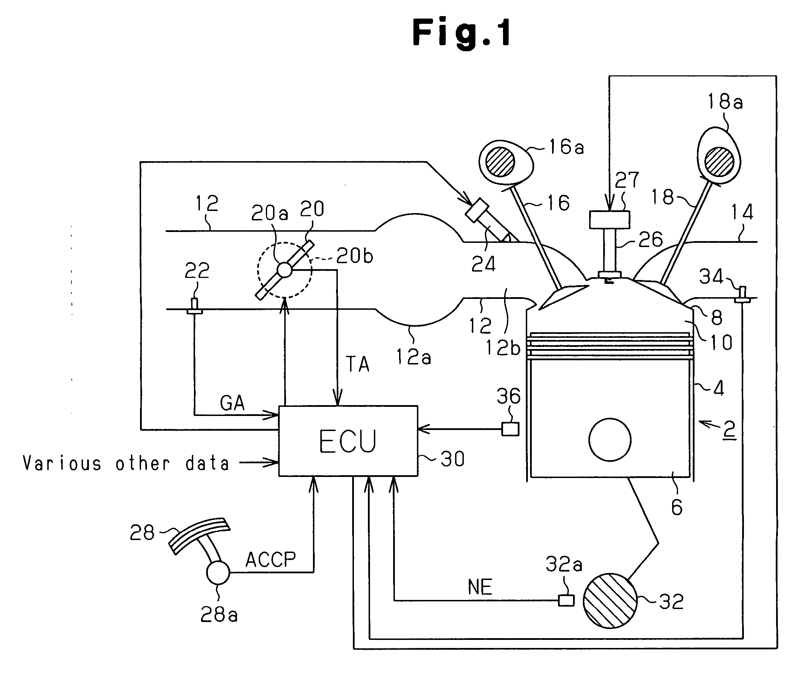

Hereinafter, an internal combustion engine controller according to a first embodiment of the present invention will be described with reference to Figs. 1 to 7. The controller is used in a vehicle gasoline engine (hereafter, referred to as "engine") 2. The engine 2 has a function for automatically stopping and restarting the engine 2 when a predetermined condition is met.

As shown in Fig. 1, a piston 6 is accommodated in each cylinder 4 of the engine, so as to reciprocate. The top of the piston 6, the inner wall of the cylinder 4, and the lower surface of a cylinder head 8 define a combustion chamber 10. The combustion chamber 10 is connected to an intake passage 12 and an exhaust passage 14. The passages 12, 14 are opened and closed by an intake valve 16 and an exhaust valve 18, respectively.

A surge tank 12a is provided in the intake passage 12, and throttle valve 20, which is actuated by a throttle motor 20b, is located upstream of the surge tank 12a. The opening degree of the throttle valve 20 (hereinafter, referred to as "throttle opening degree") TA is adjusted by controlling the actuation of the throttle motor 20b (hereinafter, referred to as "throttle opening degree control"). Accordingly, the intake air amount drawn into the combustion chamber 10 through the intake passage 12 is adjusted. In the intake passage 12, an intake port 12b is located downstream of the surge tank 12a. A fuel injection valve 24 is located in the intake port 12b so as to be directed toward the combustion chamber 10. The fuel injection amount and the fuel injection timing are adjusted by controlling the actuation of the fuel injection valve 24 (hereinafter, referred to as "fuel injection control"). An ignition plug 26 is provided in the cylinder head 8. The ignition plug 26 ignites air-fuel mixture of injected fuel and intake air in the combustion chamber 10. The ignition plug 26 is connected to an igniter 27. The ignition plug 26 is activated when receiving high voltage from the igniter 27. The ignition timing is adjusted by controlling the actuation of the igniter 27 (hereinafter, referred to as "ignition timing control")

In this configuration, the intake valve 16 is opened by an intake cam 16a. This allows fuel injected by the fuel injection valve 24 to be mixed with intake air, so that air-fuel mixture is supplied to the combustion chamber 10. Thereafter, the air-fuel mixture is ignited by the ignition plug 26 in the vicinity of the ignition top dead center. Accordingly, the air-fuel mixture is burned, and the combustion pressure pushes down the piston 6. Thereafter, the exhaust valve 18 is opened by an exhaust cam 18a. Accordingly, the burned air-fuel mixture is discharged to the exhaust passage 14 as exhaust gas.

The vehicle includes an electronic control unit (hereinafter referred to as "ECU") 30, which controls the operation of the engine 2. The ECU 30 includes a microcomputer. The ECU 30 executes various types of control such as the throttle opening degree control, the fuel injection control, and the ignition timing control of the engine 2. The ECU 30 receives detection signals from various sensors provided in the engine 2. The engine 2 has an engine speed sensor 32a, which detects the rotation speed NE of a crankshaft 32, or the engine output shaft (hereinafter, referred to as "engine speed"), and an intake air amount sensor 22 for detecting an intake air amount GA. The engine 2 is also provided with an accelerator pedal position sensor 28a for detecting a pedal depression degree ACCP, which is the amount of depression of an accelerator pedal 28, and a throttle opening degree sensor 20a for detecting the throttle opening degree TA. Further, the engine 2 is provided with an air-fuel ratio sensor 34 for detecting the air-fuel ratio A/F of exhaust gas discharged from the combustion chamber 10, and a coolant temperature sensor 36 for detecting the temperature of the coolant of the engine 2 (hereinafter, referred to as "coolant temperature THW").

When an engine starting command is generated, the ECU 30 activates a starter motor (not shown) to start the engine 2. The ECU 30 also executes automatic stop/restart of the engine 2 when a predetermined condition is met.

In the automatic stop/restart control, the fuel injection is stopped so that the engine 2 is automatically stopped when the brake pedal is stepped on and the stopped state of the vehicle has continued for a predetermined period At. When the brake pedal is released after the engine 2 has been automatically stopped, an engine starting command is generated to activate the starter motor, so that the engine 2 is automatically restarted. At this time, the starter motor is stopped when the engine speed NE becomes greater than or equal to a start determination speed NEstrt (for example, 400 rpm). As an engine stopping condition for automatically stopping the engine 2 and as an engine starting condition for automatically starting the engine 2, the engine starting condition and the engine starting condition may be set based on the shift lever position in addition to the above described condition.

In the ignition timing control, to prevent the engine speed NE from being excessively increased during starting of the engine, the ignition timing retarding control is started when the engine speed NE becomes greater than or equal to the start determination speed NEstrt. Specifically, the ignition timing θ is retarded in relation to an idling ignition timing θidle of the engine.

During the ignition timing retarding control, if the engine speed NE becomes less than or equal to the idling target speed NEidle (for example, 800 rpm ), and the difference ΔNE (ΔNE = NEidle - NE) becomes greater than or equal to the predetermined value ΔNEstp, ignition timing advancing control is executed so as to prevent the engine speed NE from being excessively decreased. Specifically, the ignition timing retarding control is stopped, and the ignition timing is advanced in relation to the ignition timing θ.

When the engine is restarted, the engine temperature is relatively high, and the friction of the engine is small. Therefore, even if the ignition timing retarding control is executed, the engine speed NE is excessively increased in some cases.

In the present embodiment, if the coolant temperature THW is higher than or equal to a predetermined temperature THW1 when the engine is restarted, the fuel injection is stopped on condition that the engine speed NE becomes greater than or equal to a fuel injection stopping speed NEcut (for example, 1000 rpm), which is greater than the idling target speed NEidle. Accordingly, the engine speed NE is prevented from being excessively increased.

After fuel cutoff control is executed, when the engine speed NE falls below the fuel injection stopping speed NEcut and the fuel injection is restarted, the engine speed NE is likely to be excessively lowered due to the influence of the most recent stopping of fuel injection. In this case, the degree of decrease of the engine speed NE is greater than that in a case where the fuel cutoff control is not executed. If the predetermined value ΔNEstp for stopping the ignition timing retarding control is set to a small value in accordance with a case where the engine temperature is relatively low, the ignition timing retarding control is stopped and the ignition timing advancing control is started at too early a stage. Therefore, if the engine temperature is relatively high when the engine is restarted, the engine power is increased at too early a stage, and the engine speed NE is excessively increased.

Further, if a degree of advancement Δθ in the ignition timing advancing control after the ignition timing retarding control is set to a great value in accordance with a case where the engine temperature is relatively low, the engine speed NE is excessively increased.

In the present embodiment, if the coolant temperature THW is higher than or equal to the predetermined temperature THW1 when the engine is started, the ECU 30 sets a predetermined value ΔNEstpx for stopping the ignition timing retarding control to a greater value than in a case where the engine temperature THW is lower than the predetermined temperature THW1. Also, if the coolant temperature THW is higher than or equal to the predetermined temperature THW1 when the engine is started, the ECU 30 sets a degree of advancement Δθx in the ignition timing advancing control to a smaller value than in a case where the engine temperature THW is lower than the predetermined temperature THW1. Accordingly, the engine speed NE is prevented from being excessively increased when the ignition timing retarding control is switched to the ignition timing advancing control at the start of the engine.

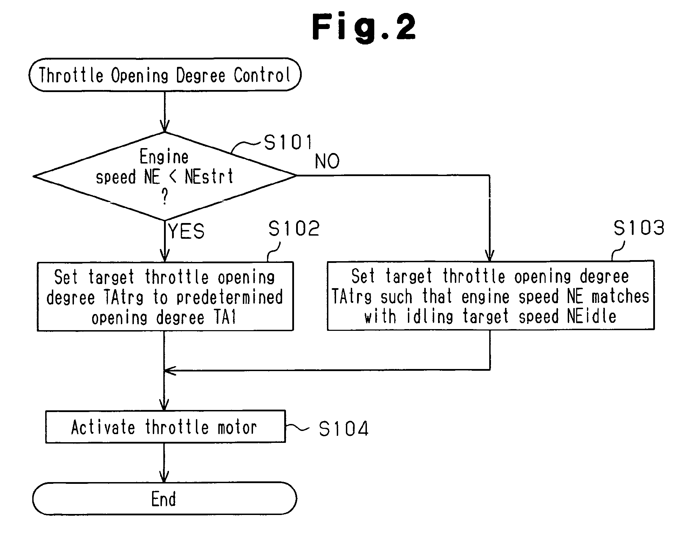

A throttle opening degree control during idling will now be described with reference to Fig. 2.

A series of processes shown in Fig. 2 is repeatedly executed by the ECU 30 at predetermined time intervals after the engine start command is generated.

As shown in Fig. 2, the ECU 30 first determines whether the engine speed NE is less than the start determination speed NEstrt (step S101) in this series of processes. If the engine speed NE is less than the start determination speed NEstrt (step S101: YES), the ECU 30 sets the target throttle opening degree TAtrg to a predetermined opening degree TA1 (step S102).

If the engine speed NE is greater than or equal to the start determination speed NEstrt (step S101: NO), the ECU 30 sets the target throttle opening degree TAtrg to such a value that engine speed NE becomes equal to the idling target speed NEidle (for example, 800 rpm) at step S103.

Once the target throttle opening degree TAtrg is set, the ECU 30 activates the throttle motor 20b such that the throttle opening degree TA becomes equal to the target throttle opening degree TAtrg (step S104), and temporarily terminates the procedure.

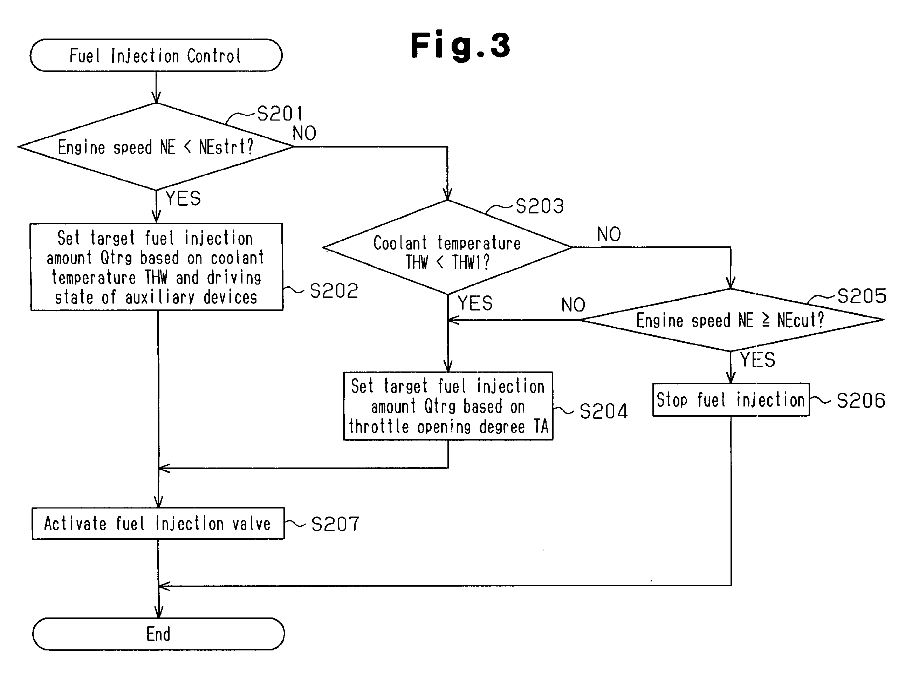

A fuel injection control during idling will now be described with reference to Fig. 3.

A series of processes shown in Fig. 3 is repeatedly executed by the ECU 30 at predetermined time intervals after the engine start command is generated.

As shown in Fig. 3, the ECU 30 first determines whether the engine speed NE is less than the start determination speed NEstrt (step S201) in this series of processes. If the engine speed NE is less than the start determination speed NEstrt (step S201: YES), the ECU 30 sets a target fuel injection amount Qtrg based on the coolant temperature THW and the driving state of the auxiliary devices (step S202). The lower the coolant temperature THW and the greater the load of the auxiliary devices, the greater the target fuel injection amount Qtrg is set to be.

If the engine speed NE is greater than or equal to the start determination speed NEstrt (step S201: NO), the ECU 30 determines whether the coolant temperature THW is less than the predetermined coolant temperature THW1 (step S203). If the coolant temperature THW is lower than the predetermined temperature THW1 (step S203: YES), the ECU 30 sets the target fuel injection amount Qtrg based on the throttle opening degree TA (step S204). The greater the throttle opening degree TA, the greater the target fuel injection amount Qtrg is set to be.

If the coolant temperature THW is higher than or equal to the predetermined temperature THW1 (step S203: NO), the ECU 30 determines whether the engine speed NE is greater than or equal to the fuel injection stopping speed NEcut (NEcut > idling target speed NEidle) at step S205. As a result, if the engine speed NE is greater than or equal to the fuel injection stopping speed NEcut (step S205: YES), the ECU 30 stops the fuel injection (step S206), and temporarily terminates the procedure. As described above, when the coolant temperature THW is higher than or equal to the predetermined temperature THW1 at the start of the engine, the ECU 30 stops the fuel injection on condition that the engine speed NE becomes greater than or equal to the fuel injection stopping speed NEcut. Accordingly, the engine speed NE is prevented from being excessively increased.

In the determination at step S205, if the engine speed NE is less than the fuel injection stopping speed NEcut (step S205: NO), the ECU 30 proceeds to step S204.

After setting the target fuel injection amount Qtrg at steps S202, S204, the ECU 30 activates the fuel injection valve 24 such that the fuel injection amount Q becomes equal to the target fuel injection amount Qtrg (step S207), and temporarily terminates the procedure.

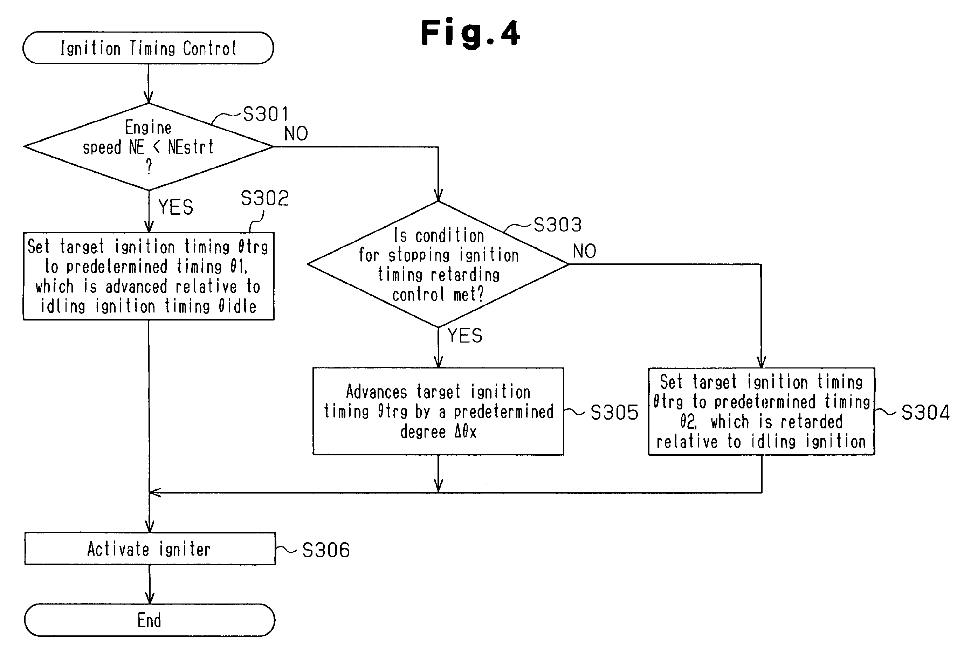

An ignition timing control during idling will now be described with reference to Fig. 4.

A series of processes shown in Fig. 4 is repeatedly executed by the ECU 30 at predetermined time intervals after the engine start command is generated.

As shown in Fig. 4, the ECU 30 first determines whether the engine speed NE is less than the start determination speed NEstrt (step S301) in this series of processes. If the engine speed NE is less than the start determination speed NEstrt (step S301: YES), the ECU 30 advances a target ignition timing θtrg to a predetermined timing θ1, which is advanced relative to the idling ignition timing θidle (step S302).

If the engine speed NE is greater than or equal to the start determination speed NEstrt (step S301: NO), the ECU 30 determines whether a condition for stopping the ignition timing retarding control is met (step S303). The condition for stopping the ignition timing retarding control is that the engine speed NE becomes less than or equal to the idling target speed NEidle, and the difference ΔNE (ΔNE = NEidle - NE) becomes greater than or equal to the predetermined value ΔNEstpx. In the present embodiment, the condition for stopping the ignition timing retarding control further includes a condition that a predetermined period At has elapsed since the ignition timing retarding control is started. In the determination of step S303, if the condition for stopping the ignition timing retarding control is not met (step S303: NO), the ECU 30 sets the target ignition timing θtrg to a predetermined timing θ2, which is retarded relative to the idling ignition timing θidle (step S304). That is, if the ignition timing advancing control of step S302 is being executed, the ignition timing advancing control is stopped, and the ignition timing retarding control is started. If the ignition timing retarding control is being executed at step S304, the ignition timing retarding control is continued.

If the ignition timing retarding control stopping condition is met (step S303: YES), the ECU 30 advances the target ignition timing θtrg by a predetermined degree Δθx (step S305). That is, if the ignition timing retarding control of step S304 is being executed, the ignition timing retarding control is stopped, and the ignition timing advancing control is started. If the ignition timing advancing control is being executed at step S305, the ignition timing advancing control is continued. In the ignition timing advancing control, the target ignition timing θtrg is advanced by Δθx every predetermined period.

After setting the target ignition timing θtrg at steps S302, S304, S305, the ECU 30 activates the igniter 27 such that the fuel injection timing θ matches with the ignition timing θtrg (step S306), and temporarily terminates the procedure.

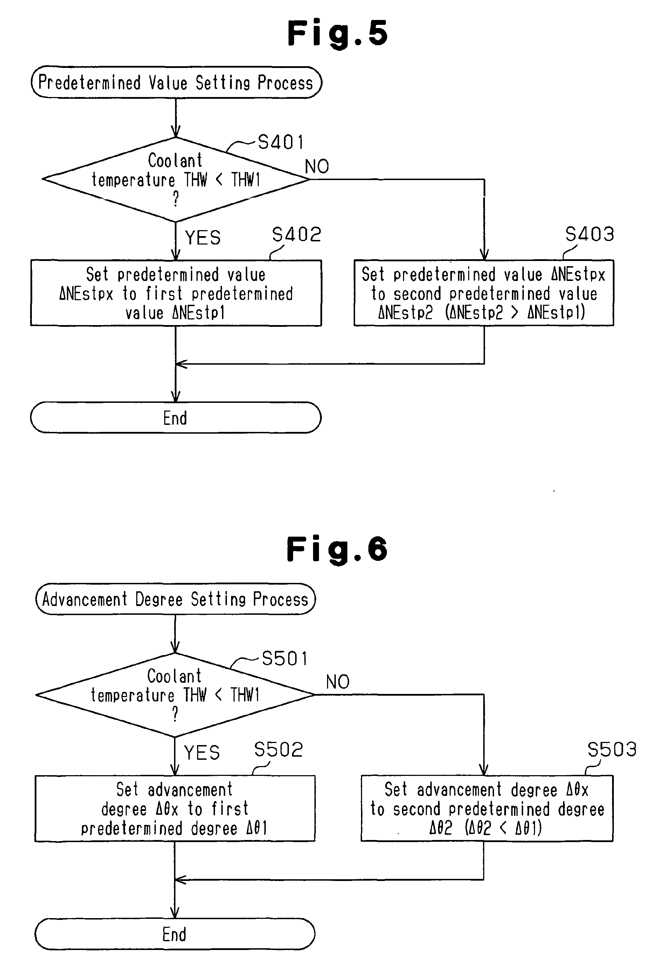

Now, a procedure for setting the predetermined value ΔNEstpx for stopping the ignition timing retarding control will be described with reference to Fig. 5.

A series of processes shown in Fig. 5 is repeatedly executed by the ECU 30 at predetermined time intervals while the ignition timing retarding control is being executed.

As shown in Fig. 5, the ECU 30 first determines whether the coolant temperature THW is lower than the predetermined temperature THW1 (step S401) in this series of processes. If the coolant temperature THW is lower than the predetermined temperature THW1 (step S401: YES), the ECU 30 sets the predetermined value ΔNEstpx to a first predetermined value ΔNEstp1 (step S402), and temporarily stops the procedure.

If the coolant temperature THW is higher than or equal to the predetermined temperature THW1 (step S401: NO), the ECU 30 sets the predetermined value ΔNEstpx to a second predetermined value ΔNEstp2 (ΔNEstp2 > ΔNEstep1) at step S403. The second predetermined value ΔNEstp2 is greater than the first predetermined value ΔNEstp1. Accordingly, when the coolant temperature THW is relatively high, the ignition timing retarding control is less frequently stopped at too early a stage.

Now, a procedure for setting the predetermined degree Δθx in the ignition timing advancing control will now be described with reference to Fig. 6.

A series of processes shown in Fig. 6 is repeatedly executed by the ECU 30 while the ignition timing advancing control is executed.

As shown in Fig. 6, the ECU 30 first determines whether the coolant temperature THW is lower than the predetermined temperature THW1 (step S501) in this series of processes. If the coolant temperature THW is lower than the predetermined temperature THW1 (step S501: YES), the ECU 30 sets the predetermined degree Δθx to a first predetermined degree Δθ1 (step S502), and temporarily stops the procedure.

If the coolant temperature THW is higher than or equal to the predetermined temperature THW1 (step S501: NO), the ECU 30 sets the predetermined degree Δθx to a second predetermined degree Δθ2 (Δθ2 < Δθ1) at step S503, and temporarily stops the procedure. Accordingly, the advancement degree Δθx in the ignition timing advancing control is not set to an excessively great value in relation to the coolant temperature THW.

The predetermined value ΔNEstpx for stopping the ignition timing retarding control and the advancement degree Δθx used in the ignition timing advancing control executed after the ignition timing retarding control both contribute to increase and decrease of the engine power, that is, the degree of changes in the engine speed NE. Therefore, the predetermined value ΔNEstpx and the predetermined degree Δθx are not set independently from each other. Rather, the predetermined degree Δθx is set in accordance with the predetermined value Δ NEstpx through experiments.

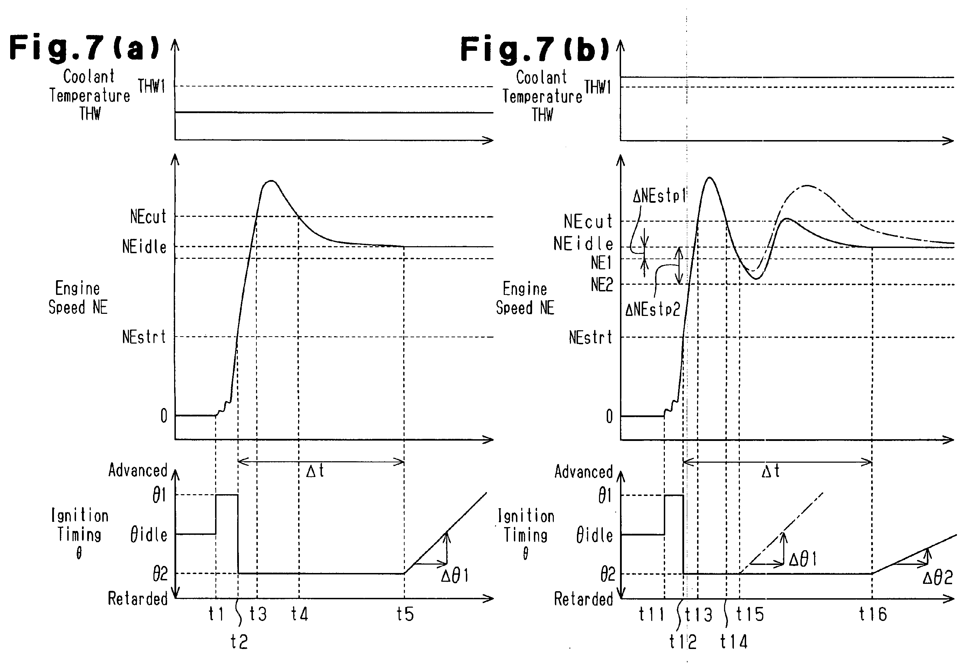

Changes of the engine speed NE accompanying the execution of the ignition timing control will now be described with reference to the timing chart of Fig. 7.

Fig. 7(a) shows one example in which the coolant temperature THW is lower than the predetermined temperature THW1, as in cold-starting of the engine. Fig. 7(b) shows one example in which the coolant temperature THW is higher than the predetermined temperature THW1, as in restarting of the engine.

As shown in Fig. 7(a), when an engine start command is generated at time point t1, the starter motor is activated and the fuel injection is executed. Accordingly, the engine speed NE is increased. At this time, the ignition timing is set to the predetermined timing θ1, which is advanced relative to the idling ignition timing θidle, so that the engine power is easily increased. When the engine speed NE surpasses the start determination speed NEstrt at time point t2, the ignition timing is set to the predetermined timing θ2, which is retarded relative to the idling ignition timing θidle, so that the engine power is prevented from being excessively increased. Thereafter, during the period from time point t3 to time point t4, the engine speed NE is greater than the fuel injection stopping speed NEcut. However, since the coolant temperature THW is lower than the predetermined temperature THW1, the fuel cutoff control is not executed. Then, at time point t5, or when the predetermined period Δt has elapsed since the ignition timing retarding control is started at time t2, the ignition timing retarding control is stopped and the ignition timing advancing control is started. Since the coolant temperature THW is lower than the predetermined temperature THW1, the degree of advancement Δθx in the ignition timing advancing control is set to the predetermined degree Δθ1.

Next, as shown in Fig. 7(b), when an engine start command is generated at time point t11, the starter motor is activated and the fuel injection is executed. Accordingly, the engine speed NE is increased. At this time, the ignition timing is set to the predetermined timing θ1, which is advanced relative to the idling ignition timing θidle. When the engine speed NE surpasses the start determination speed NEstrt at time point t12, the ignition timing is set to the predetermined timing θ2, which is retarded relative to the idling ignition timing θ idle. Thereafter, during the period from time point t13 to time point t14, since the coolant temperature THW is higher than the predetermined temperature THW1, and the engine speed NE is greater than the fuel injection stopping speed NEcut, the fuel cutoff control is executed. When the fuel cutoff control is stopped and the fuel injection is restarted at time point t14, the engine speed NE is significantly decreased due to the influence of the fuel cutoff control. In this case, since the coolant temperature THW is higher than the predetermined temperature THW1, the predetermined value ΔNEstpx for stopping the ignition timing retarding control is set to the second predetermined value ΔNEstp2, which is greater than the first predetermined value Δ NEstp1. Therefore, even if the engine speed NE drops and falls below the predetermined engine speed NE1, which is obtained by subtracting the predetermined value ΔNEstp1 from the idling target engine speed NEidle (NE1 = NEidle - ΔNEstp1), the ignition timing retarding control is not stopped. Then, at time point t16, or when the predetermined period Δt has elapsed since the ignition timing retarding control is started at time t12, the ignition timing retarding control is stopped and the ignition timing advancing control is started. Since the coolant temperature THW is higher than the predetermined temperature THW1, the degree of advancement Δθx in the ignition timing advancing control is set to the predetermined degree Δθ 2, which is less than the first predetermined degree Δθ1.

If the predetermined value ΔNEstpx for stopping the ignition timing retarding control is set to the first predetermined value ΔNEstp1 when the coolant temperature THW is higher than the predetermined temperature THW1, the engine speed NE changes as indicated by the alternate long and short dash line in Fig. 7(b). In this case, when the engine speed NE falls below the predetermined engine speed NE1 at time point t15, the ignition timing retarding control is stopped, and the ignition timing advancing control is started. As a result, the ignition timing retarding control is stopped at too early a stage, and the ignition timing advancing control for increasing the engine power is executed. This excessively increases the engine speed NE. Further, since the degree of advancement Δθx in the ignition timing advancing control is set to the first predetermined degree Δθ1, the engine speed NE is likely to be further excessively increased.

The internal combustion engine controller of the present embodiment has the following advantages.
(1) When the engine temperature is high, the engine friction is smaller than that when the engine temperature is low. Accordingly, if the engine temperature is high when the engine is started, the engine speed is likely to be excessively increased. In a configuration having fuel injection control means, when the engine speed falls below a predetermined engine speed when the fuel injection is not performed, the fuel injection is restarted. At this time, the engine speed is likely to be excessively lowered due to the influence of the most recent stopping of fuel injection. In this case, if the predetermined value for stopping the ignition timing retarding control is set to a small value in accordance with a case where the engine temperature is relatively low, the ignition timing retarding control is stopped at too early a stage and the ignition timing advancing control is started. Therefore, when the engine temperature is relatively high, the engine power is increased at too early a stage and the engine speed is likely to be excessively increased.
   In this regard, the above described ECU 30 executes the ignition timing retarding control for retarding the ignition timing in relation to the idling ignition timing θidle when the engine is started. Also, during the execution of the ignition timing retarding control, if the engine speed NE becomes less than or equal to the idling target speed NEidle, and the difference ΔNE of these values (ΔNE = NEidle -NE) becomes greater than or equal to the predetermined value ΔNEstpx, the ECU 30 stops the ignition timing retarding control and starts the ignition timing advancing control. Also, when the coolant temperature THW is higher than or equal to the predetermined temperature THW1 at the start of the engine, the ECU 30 stops the fuel injection on condition that the engine speed NE is greater than or equal to the fuel injection stopping speed NEcut. Further, if the coolant temperature THW is higher than or equal to the predetermined temperature THW1 at the start of the engine, the ECU 30 sets the predetermined value ΔNEstpx for stopping the ignition timing retarding control to a larger value than in a case where the engine temperature THW is lower than the predetermined temperature THW1. Accordingly, when the coolant temperature THW is relatively high, the ignition timing retarding control is less frequently stopped at too early a stage. That is, the frequency at which the ignition timing advancing control for increasing the engine power is reduced. Accordingly, the engine speed NE is prevented from being excessively increased due to the predetermined value ΔNEstpx being set to an excessively small value in relation to the coolant temperature THW. Accordingly, the engine speed NE is prevented from being excessively increased when the ignition timing retarding control is switched to the ignition timing advancing control at the start of the engine.
(2) If the degree of advancement in the ignition timing advancing control executed after the ignition timing retarding control is set to a great value in accordance with a case where the engine temperature is relatively low, the engine speed is likely to be excessively increased. In this regard, if the coolant temperature THW is higher than or equal to the predetermined temperature THW1 when the engine is started, the above described ECU 30 sets the degree of advancement Δθx in the ignition timing advancing control to a smaller value than in a case where the engine temperature THW is lower than the predetermined temperature THW1. Accordingly, if the coolant temperature THW is high when the engine is started, the degree of advancement Δθx in the ignition timing advancing control is set to a small value. Accordingly, the engine speed NE is prevented from being excessively increased due to the degree of advancement Δθx being set to an excessively great value in relation to the coolant temperature THW.
(3) The predetermined degree for stopping the ignition timing retarding control and the degree of advancement in the ignition timing advancing control after the ignition timing retarding control both contribute to increase and decrease of the engine power, that is, the degree of changes in the engine speed. In this regard, the above described ECU 30 sets the degree of advancement Δθx in the ignition timing advancing control in accordance with the predetermined value ΔNEstpx for stopping the ignition timing retarding control. Therefore, an excessive increase of the engine speed is reliably suppressed.

### <Second Embodiment>

An internal combustion engine controller according to a second embodiment of the present invention will now be described.

In the first embodiment, if the coolant temperature THW is higher than or equal to the predetermined temperature THW1 when the engine is started, the ECU 30 sets the predetermined value ΔNEstpx for stopping the ignition timing retarding control to a larger value and sets the degree of advancement Δθx in the ignition timing advancing control to a smaller value, than in a case where the engine temperature THW is lower than the predetermined temperature THW1. In this respect, the second embodiment is different from the first embodiment in that the predetermined value ΔNEstp for stopping the ignition timing retarding control (the first predetermined value ΔNEstp1) to a fixed value.

As described above, if the engine speed NE falls below the fuel injection stopping speed NEcut when the fuel injection is not being executed, and the fuel injection is restarted, the engine speed NE is likely to excessively lowered due to the influence of the most recent stopping of fuel injection. Therefore, the ignition timing retarding control is stopped at an early stage, and the ignition timing advancing control is started. If the degree of advancement Δθx in the ignition timing advancing control is set to a great value in accordance with a case where the engine temperature is relatively low, the engine power is excessively increased when the engine temperature is relatively high. Accordingly, the engine speed NE is likely to be excessively increased.

In the second embodiment, if the coolant temperature THW is higher than or equal to the predetermined temperature THW1 when the engine is started, the ECU 30 sets the degree of advancement Δθx in the ignition timing advancing control to a smaller value than in a case
where the engine temperature THW is lower than the predetermined temperature THW1. Accordingly, the engine speed NE is prevented from being excessively increased.

The internal combustion engine controller according to the second embodiment has the following advantages.
(1) When the engine temperature is high, the engine friction is smaller than that when the engine temperature is low. Accordingly, if the engine temperature is high when the engine is started, the engine speed is likely to be excessively increased. In a configuration having fuel injection control means, when the engine speed falls below a predetermined engine speed when the fuel injection is not performed, the fuel injection is restarted. At this time, the engine speed is likely to be excessively lowered due to the influence of the most recent stopping of fuel injection. Therefore, the ignition timing retarding control is stopped at an early stage, and the ignition timing advancing control is started. If the degree of advancement in the ignition timing advancing control is set to a great value in accordance with a case where the engine temperature is relatively low, the engine power is excessively increased when the engine temperature is relatively high. Accordingly, the engine speed is likely to be excessively increased.

In this regard, the above described ECU 30 executes the ignition timing retarding control for retarding the ignition timing in relation to the idling ignition timing θidle when the engine is started. Also, during the execution of the ignition timing retarding control, on condition that the engine speed NE becomes less than or equal to the idling target speed NEidle, and the difference ΔNE of these values (ΔNE = NEidle - NE) becomes greater than or equal to the predetermined value ΔNEstp1, the ECU 30 stops the ignition timing retarding control and executes the ignition timing advancing control for advancing the ignition timing. Further, if the coolant temperature THW is higher than or equal to the predetermined temperature THW1 when the engine is started, the ECU 30 sets a degree of advancement Δθx in the ignition timing advancing control to a smaller value than in a case where the engine temperature THW is lower than the predetermined temperature THW1. Accordingly, the engine speed NE is prevented from being excessively increased due to the degree of advancement Δθx being set to an excessively great value in relation to the coolant temperature THW. Accordingly, the engine speed NE is prevented from being excessively increased when the ignition timing retarding control is switched to the ignition timing advancing control.

The internal combustion engine controllers according to the first and second embodiments may be modified as follows.

In each embodiment, the present invention is exemplified by the port invention type engine 2. However, the present invention may be applied to an in-cylinder injection type engine, in which a fuel injection valve injects fuel directly into a combustion chamber, and an engine that includes a fuel injection valve for injecting fuel to a port and a fuel injection valve for injecting fuel into the cylinder.

In each embodiment, the ignition timing retarding control is stopped when the predetermined period Δt has elapsed since the ignition timing retarding control was started. However, this configuration may be omitted since this condition is not necessary as the condition for stopping the ignition timing retarding control according to the present invention.

In each embodiment, the ECU 30 stops the ignition timing retarding control on condition that the engine speed NE becomes less than or equal to the idling target speed NEidle, and the difference ΔNE of these values (ΔNE = NEidle -NE) becomes greater than or equal to the predetermined value ΔNEstpx (ΔNEstp1 in the second embodiment). Instead, the ECU 30 may stop the ignition timing retarding control on condition, for example, that the ratio of the engine speed NE and the idling target speed NEidle (NEidle/NE) becomes greater than or equal to a predetermined value. In short, the ignition timing retarding control may be stopped on any condition that the engine speed NE is smaller than or les than the idling target speed NEidle and the degree of difference becomes greater than or equal to a predetermined degree.

In the first embodiment, during the ignition timing retarding control, the coolant temperature THW is read in at predetermined time intervals, and the predetermined value ΔNEstpx for stopping the ignition timing retarding control is set in accordance with the coolant temperature THW, and the degree of advancement Δθx in the ignition timing advancing control is set at predetermined intervals. However, since the engine temperature is not abruptly changed when the engine is started, it may be configured that the coolant temperature THW is read in only once immediately before or after the engine is started, and the predetermined value ΔNEstpx and the degree of advancement Δθx may be set in accordance with the coolant temperature THW. Also, in the second embodiment, the coolant temperature THW may be read in only once immediately before or after the engine is started, and the degree of advancement Δθx may be set in accordance with the coolant temperature THW.

In the first embodiment, the predetermined value ΔNEstpx for stopping the ignition timing retarding control is set through experiments, and the predetermined degree Δθx in the ignition timing advancing control is set in accordance with the set predetermined value ΔNEstpx. Instead, it may be configured that the predetermined degree Δθx in the ignition timing advancing control is first set, and the predetermined value ΔNEstpx for stopping the ignition timing retarding control is set in accordance with the set predetermined degree Δθx. The predetermined value ΔNEstpx and the predetermined degree Δθx may be set independently from each other.

To prevent the engine speed NE from being excessively increased, if the coolant temperature THW is higher than or equal to the predetermined temperature THW1 when the engine is started, the degree of advancement Δθx in the ignition timing advancing control is preferably set to a smaller value than in a case where the engine temperature THW is lower than the predetermined temperature THW1 as in the first embodiment. However, if the coolant temperature THW is higher than or equal to the predetermined temperature THW1 when the engine is started, the degree of advancement in the ignition timing advancing control may be a fixed value as long as the predetermined degree for stopping the ignition timing retarding control to a larger value than in a case where the engine temperature THW is lower than the predetermined temperature THW1.

In each embodiment, the engine temperature is obtained based on the coolant temperature THW. However, the engine temperature may be obtained using a parameter other than the coolant temperature THW.

In each embodiment, irrespective of the distinction between a case where the engine is started through the operation of the key and a case where the engine is restarted, if the engine temperature is higher than or equal to a predetermined value when the engine is started, a predetermined degree for stopping the ignition timing retarding control is set to a greater value than in the case where the engine temperature is lower than the predetermined temperature. Alternatively, if the engine temperature is high when the engine is started, the degree of advancement in the ignition timing advancing control is set to a smaller value than in the case where the engine temperature is low. Instead, the predetermined degree and the degree of advancement may be changed in accordance with the engine temperature only when the engine is restarted. That is, the present invention does not necessary need to be applied to a case where the engine is started with the key.

In each embodiment, the engine 2 may be a type that has no automatic stop/restart function. In this also, the advantages of the first and second embodiments are achieved. In short, the advantages are achieved as long as, if the engine temperature is higher than or equal to a predetermined temperature when the engine is started, the predetermined degree for stopping the ignition timing retarding control is set to a greater value than in a case where the engine temperature is lower than the predetermined temperature. Alternatively, it may be configured that, if the engine temperature is high when the engine is started, the degree of advancement in the ignition timing advancing control is set to a smaller value than in the case where the engine temperature is low.

## Claims

1. A controller of an internal combustion engine (2), the controller comprising ignition timing control means (30) and fuel injection control means (30), wherein, at the start of the engine (2), the ignition timing control means (30) executes ignition timing retarding control for retarding the ignition timing in relation to idling ignition timing (θidle) of the engine (2), wherein, when the ignition timing retarding control is being executed, the ignition timing control means (30) stops the ignition timing retarding control and executes ignition timing advancing control for advancing the ignition timing on condition that the engine speed (NE) becomes less than or equal to an idling target engine speed (NEidle) and the degree of difference between the engine speed (NE) and the idling target engine speed (NEidle) becomes greater than or equal to a predetermined value (ΔNEstpx), wherein, when the engine temperature (THW) is higher than or equal to a predetermined temperature (THW1) at the start of the engine (2), the fuel injection control means (30) stops fuel injection on condition that the engine speed (NE) becomes greater than or equal to a predetermined speed (NEhg),
the controller being **characterized in that**, if the engine temperature (THW) is higher than or equal to the predetermined temperature (THW1) at the start of the engine (2), the ignition timing control means (30) sets the predetermined value (ΔNEstpx) for stopping the ignition timing retarding control to a greater value than in a case where the engine temperature (THW) is lower than the predetermined temperature (THW1).

2. The internal combustion engine (2) controller according to claim 1, **characterized in that**, if the engine temperature (THW) is higher than or equal to the predetermined temperature (THW1) at the start of the engine (2), the ignition timing control means (30) sets a degree of advancement (Δθx) in the ignition timing advancing control to a smaller value than in a case where the engine temperature (THW) is lower than the predetermined temperature (THW1).

3. The internal combustion engine (2) controller according to claim 2, **characterized in that** the ignition timing control means (30) sets the degree of advancement (Δθx) in the ignition timing advancing control in accordance with the predetermined value (ΔNEstpx) for stopping the ignition timing retarding control.

4. The internal combustion engine (2) controller according to any one of claims 1 to 3, **characterized in that**, when the ignition timing retarding control is being executed, the ignition timing control means (30) stops the ignition timing retarding control and executes the ignition timing advancing control on condition that the engine speed (NE) becomes less than or equal to idling target engine speed (NEidle) and the difference between the engine speed (NE) and the idling target engine speed (NEidle) becomes greater than or equal to a predetermined value (ΔNEstpx), wherein, if the engine temperature (THW) is higher than or equal to the predetermined temperature (THW1) at the start of the engine (2), the ignition timing control means (30) sets the predetermined value (ΔNEstpx) for stopping the ignition timing retarding control to a greater value than in a case where the engine temperature (THW) is lower than the predetermined temperature (THW1).

5. A controller of an internal combustion engine (2), the controller comprising ignition timing control means (30), wherein, at the start of the engine (2), the ignition timing control means (30) executes ignition timing retarding control for retarding the ignition timing in relation to idling ignition timing (θidle) of the engine (2), wherein, when the ignition timing retarding control is being executed, the ignition timing control means (30) stops the ignition timing retarding control and executes ignition timing advancing control for advancing the ignition timing on condition that the engine speed (NE) becomes less than or equal to an idling target engine speed (NEidle) and the degree of difference between the engine speed (NE) and the idling target engine speed (NEidle) becomes greater than or equal to a predetermined value (ΔNEstp1),
the controller being **characterized in that**, if the engine temperature (THW) is high at the start of the engine (2), the ignition timing control means (30) sets the degree of advancement (Δθx) in the ignition timing advancing control to a smaller value than in a case where the engine temperature (THW) is low.

6. The internal combustion engine (2) controller according to claim 5, **characterized by** fuel injection control means (30), wherein, if the engine temperature (THW) is higher than or equal to a predetermined temperature (THW1) at the start of the engine (2), the fuel injection control means (30) stops fuel injection on condition that the engine speed (NE) becomes greater than or equal to a predetermined speed (NEhg), and
wherein, if the engine temperature (THW) is higher than or equal to the predetermined temperature (THW1), the ignition timing control means (30) sets the degree of advancement (Δθx) in the ignition timing advancing control to a smaller degree than in a case where the engine temperature (THW) is lower than the predetermined temperature (THW1).

7. The internal combustion engine (2) controller according to claim 6, **characterized in that** the ignition timing control means (30) sets the predetermined value (ΔNEstp1) for stopping the ignition timing retarding control in accordance with the degree of advancement (Δθx) in the ignition timing advancing control.

8. The internal combustion engine (2) controller according to any one of claims 5 to 7, **characterized in that**, when the ignition timing retarding control is being executed, the ignition timing control means (30) stops the ignition timing retarding control and executes the ignition timing advancing control on condition that the engine speed (NE) becomes less than or equal to idling target engine speed (NEidle) and the difference between the engine speed (NE) and the idling target engine speed (NEidle) becomes greater than or equal to a predetermined value (ΔNEstp1), wherein, if the engine temperature (THW) is higher than or equal to the predetermined temperature (THW1) at the start of the engine (2), the ignition timing control means (30) sets the predetermined value (ΔNEstp1) for stopping the ignition timing retarding control to a greater value than in a case where the engine temperature (THW) is lower than the predetermined temperature (THW1).

## Patentansprüche

1. Steuerungseinrichtung einer Verbrennungskraftmaschine (2), wobei die Steuerungseinrichtung eine Zündzeitpunkt-Steuerungsvorrichtung (30) und eine Kraftstoffeinspritzungs-Steuerungsvorrichtung (30) aufweist, wobei die Zündzeitpunkt-Steuerungsvorrichtung (30) beim Start des Motors (2) eine Zündzeitpunkt-Nachverstellungssteuerung zum Verstellen des Zündzeitpunkts in Richtung spät in Bezug auf einen Leerlauf-Zündzeitpunkt (θidle) des Motors (2) ausführt, wobei, wenn die Zündzeitpunkt-Nachverstellungssteuerung ausgeführt wird, die Zündzeitpunkt-Steuerungsvorrichtung (30) die Zündzeitpunkt-Nachverstellungssteuerung stoppt und die Zündzeitpunkt-Vorverstellungssteuerung zum Verstellen des Zündzeitpunkts in Richtung früh unter der Bedingung, dass eine Motordrehzahl (NE) kleiner oder gleich einer Soll-Leerlaufmotordrehzahl (NEidle) wird und der Unterscheidungsgrad zwischen der Motordrehzahl (NE) und der Soll-Leerlaufmotordrehzahl (NEidle) größer oder gleich einem vorbestimmten Wert (ΔNEstpx) wird, ausführt, wobei, wenn beim Start des Motors (2) eine Motortemperatur (THW) größer oder gleich einer vorbestimmten Temperatur (THW1) ist, die Kraftstoffeinspritzungs-Steuerungsvorrichtung (30) eine Kraftstoffeinspritzung unter der Bedingung, dass die Motordrehzahl (NE) größer oder gleich einer vorbestimmten Drehzahl (NEhg) wird, stoppt,
wobei die Steuerungseinrichtung **dadurch gekennzeichnet ist, dass**, wenn beim Start des Motors (2) die Motortemperatur (THW) größer oder gleich der vorbestimmten Temperatur (THW1) ist, die Zündzeitpunkt-Steuerungsvorrichtung (30) den vorbestimmten Wert (ΔNEstpx) zum Stoppen der Zündzeitpunkt-Nachverstellungssteuerung auf einen größeren Wert als in einem Fall, in welchem die Motortemperatur (THW) kleiner als die vorbestimmte Temperatur (THW1) ist, einstellt.

2. Verbrennungskraftmaschinen-Steuerungseinrichtung nach Anspruch 1, **dadurch gekennzeichnet, dass**, wenn beim Start des Motors (2) die Motortemperatur (THW) höher oder gleich der vorbestimmten Temperatur (THW1) ist, die Zündzeitpunkt-Steuerungsvorrichtung (30) einen Grad einer Vorverstellung (Δθx) in der Zündzeitpunkt-Vorverstellungssteuerung auf einen kleineren Wert als in einem Fall, in dem die Motortemperatur (THW) geringer als die vorbestimmte Temperatur (THW1) ist, einstellt.

3. Verbrennungskraftmaschinen-Steuerungseinrichtung (2) gemäß Anspruch 2, **dadurch gekennzeichnet, dass** die Zündzeitpunkt-Steuerungsvorrichtung (30) den Grad einer Vorverstellung (Δθx) in der Zündzeitpunkt-Vorverstellungssteuerung gemäß dem vorbestimmten Wert (ΔNEstpx) zum Stoppen der Zündzeitpunkt-Nachverstellungssteuerung einstellt.

4. Verbrennungskraftmaschinen-Steuerungseinrichtung (2) gemäß einem der Ansprüche 1 bis 3, **dadurch gekennzeichnet, dass**, wenn die Zündzeitpunkt-Nachverstellungssteuerung ausgeführt wird, die Zündzeitpunkt-Steuerungsvorrichtung (30) die Zündzeitpunkt-Nachverstellungssteuerung stoppt und die Zündzeitpunkt-Vorverstellungssteuerung unter der Bedingung, dass die Motordrehzahl (NE) kleiner oder gleich der Soll-Leerlaufmotordrehzahl (NEidle) wird und die Differenz zwischen der Motordrehzahl (NE) und der Soll-Leerlaufmotordrehzahl (NEidle) größer oder gleich einem vorbestimmten Wert (ΔNEstpx) wird, ausführt, wobei, wenn die Motortemperatur (THW) beim Start des Motors (2) größer oder gleich der vorbestimmten Temperatur (THW1) ist, die Zündzeitpunkt-Steuerungsvorrichtung (30) den vorbestimmten Wert (ΔNEstpx) zum Stoppen der Zündzeitpunkt-Nachverstellungssteuerung auf einen größeren Wert als in dem Fall, in welchem die Motortemperatur (THW) kleiner als die vorbestimmte Temperatur (THW1) ist, einstellt.

5. Steuerungseinrichtung einer Verbrennungskraftmaschine (2), wobei die Steuerungseinrichtung eine Zündzeitpunkt-Steuerungsvorrichtung (30) aufweist, wobei, beim Start des Motors (2) die Zündzeitpunkt-Steuerungsvorrichtung (30) die Zündzeitpunkt-Nachverstellungssteuerung zum Verstellen des Zündzeitpunkts in Richtung spät in Bezug auf den Leerlaufzündzeitpunkt (θidle) des Motors (2) ausführt, wobei, wenn die Zündzeitpunkt-Nachverstellungssteuerung ausgeführt wird, die Zündzeitpunkt-Steuerungsvorrichtung (30) die Zündzeitpunkt-Nachverstellungssteuerung stoppt und die Zündzeitpunkt-Vorverstellungssteuerung zum Verstellen des Zündzeitpunkts in Richtung früh unter der Bedingung, dass die Motordrehzahl (NE) kleiner oder gleich einer Soll-Leerlaufmotordrehzahl (NEidle) wird und der Unterscheidungsgrad zwischen der Motordrehzahl (NE) und der Soll-Leerlaufmotordrehzahl (NEidle) größer oder gleich einem vorbestimmten Wert (ΔNEstp1) wird, ausführt,
wobei die Steuerungseinrichtung **dadurch gekennzeichnet ist, dass**, wenn die Motortemperatur (THW) beim Start des Motors (2) hoch ist, die Zündzeitpunkt-Steuerungsvorrichtung (30) den Grad der Vorverstellung (Δθx) in der Zündzeitpunkt-Vorverstellungssteuerung auf einen kleineren Wert als in einem Fall, in welchem die Motortemperatur (THW) gering ist, einstellt.

6. Verbrennungskraftmaschinen-Steuerungseinrichtung (2) nach Anspruch 5, **gekennzeichnet durch** eine Kraftstoffeinspritzungs-Steuerungsvorrichtung (30), wobei, wenn die Motortemperatur (THW) beim Start des Motors (2) höher oder gleich einer vorbestimmten Temperatur (THW1) ist, die Kraftstoffeinspritzungs-Steuerungsvorrichtung (30) eine Kraftstoffeinspritzung unter der Bedingung, dass die Motordrehzahl (Ne) größer oder gleich einer vorbestimmten Drehzahl (NEhg) wird, stoppt und
wobei, wenn die Motortemperatur (THW) höher oder gleich der vorbestimmten Motortemperatur (THW1) ist, die Zündzeitpunkt-Steuerungsvorrichtung (30) den Grad an Vorverstellung (Δθx) in der Zündzeitpunkt-Vorverstellungssteuerung auf einen kleineren Grad als in einem Fall, in dem die Motortemperatur (THW) geringer als die vorbestimmte Temperatur (THW1) ist, einstellt.

7. Verbrennungskraftmaschinen-Steuerungseinrichtung (2) nach Anspruch 6, **dadurch gekennzeichnet, dass** die Zündzeitpunkt-Steuerungsvorrichtung (30) den vorbestimmten Wert (ΔNEstpx) zum Stoppen der Zündzeitpunkt-Nachverstellungssteuerung gemäß dem Grad an Vorverstellung (Δθx) in der Zündzeitpunkt-Vorverstellungssteuerung einstellt.

8. Verbrennungskraftmaschinen-Steuerungseinrichtung (2) nach einem der Ansprüche 5 bis 7, **dadurch gekennzeichnet, dass**, wenn die Zündzeitpunkt-Nachverstellungssteuerung ausgeführt wird, die Zündzeitpunkt-Steuerungsvorrichtung (30) die Zündzeitpunkt-Nachverstellungssteuerung stoppt und die Zündzeitpunkt-Vorverstellungssteuerung unter der Bedingung, dass die Motordrehzahl (NE) kleiner oder gleich einer Soll-Leerlaufmotordrehzahl (NEidle) wird und die Differenz zwischen der Motordrehzahl (NE) und der Soll-Leerlaufmotordrehzahl (NEidle) größer oder gleich einem vorbestimmten Wert (ΔNEstp1) wird, ausführt, wobei, wenn die Motortemperatur (THW) beim Start des Motors (2) höher oder gleich der vorbestimmten Temperatur (THW1) ist, die Zündzeitpunkt-Steuerungsvorrichtung (30) den vorbestimmten Wert (ΔNEstp1) zum Stoppen der Zündzeitpunkt-Nachverstellungssteuerung auf einen größeren Wert als in einem Fall, in welchem die Motortemperatur (THW) geringer als die vorbestimmte Temperatur (THW1) ist, einstellt.

## Revendications

1. Régulateur d'un moteur à combustion interne (2), le régulateur comprenant un moyen (30) de commande de calage de l'allumage et un moyen (30) de commande d'injection de carburant, dans lequel, au démarrage du moteur (2), le moyen (30) de commande de calage de l'allumage exécute une commande de retard du calage de l'allumage destinée à retarder le calage de l'allumage par rapport au calage de l'allumage au ralenti (θidle) du moteur (2), dans lequel, lorsque la commande de retard du calage de l'allumage est en cours d'exécution, le moyen (30) de commande de calage de l'allumage arrête la commande de retard du calage de l'allumage et exécute une commande d'avance du calage de l'allumage destinée à avancer le calage de l'allumage à condition que la vitesse de moteur (NE) devienne inférieure ou égale à une vitesse de moteur cible de ralenti (NEidle) et que le niveau de différence entre la vitesse de moteur (NE) et la vitesse de moteur cible de ralenti (NEidle) devienne supérieur ou égal à une valeur prédéterminée (ΔNEstpx), dans lequel, lorsque la température de moteur (THW) est supérieure ou égale à une température prédéterminée (THW1) au démarrage du moteur (2), le moyen (30) de commande d'injection de carburant arrête l'injection de carburant à condition que la vitesse de moteur (NE) devienne supérieure ou égale à une vitesse prédéterminée (NEhg),
le régulateur étant **caractérisé en ce que**, si la température de moteur (THW) est supérieure ou égale à la température prédéterminée (THW1) au démarrage du moteur (2), le moyen (30) de commande de calage de l'allumage fixe la valeur prédéterminée (ΔNEstpx) destinée à arrêter la commande de retard de calage de l'allumage à une valeur plus grande que dans le cas où la température de moteur (THW) est plus basse que la température prédéterminée (THW1).

2. Régulateur de moteur à combustion interne (2) selon la revendication 1, **caractérisé en ce que**, si la température de moteur (THW) est supérieure ou égale à la température prédéterminée (THW1) au démarrage du moteur (2), le moyen (30) de commande de calage de l'allumage fixe un niveau d'avance (Δθx) dans la commande d'avance de calage de l'allumage à une valeur plus petite que dans le cas où la température de moteur (THW) est plus basse que la température prédéterminée (THW1).

3. Régulateur de moteur à combustion interne (2) selon la revendication 2, **caractérisé en ce que** le moyen (30) de commande de calage de l'allumage fixe le niveau d'avance (Δθx) dans la commande d'avance de calage de l'allumage en fonction de la valeur prédéterminée (ΔNEstpx) destinée à arrêter la commande de retard de calage de l'allumage.

4. Régulateur de moteur à combustion interne (2) selon l'une quelconque des revendications 1 à 3, **caractérisé en ce que**, lorsque la commande de retard de calage de l'allumage est en cours d'exécution, le moyen (30) de commande de calage de l'allumage arrête la commande de retard de calage de l'allumage et exécute la commande d'avance de calage de l'allumage à condition que la vitesse de moteur (NE) devienne inférieure ou égale à la vitesse de moteur cible de ralenti (NEidle) et que la différence entre la vitesse de moteur (NE) et la vitesse de moteur cible de ralenti (NEidle) devienne supérieure ou égale à une valeur prédéterminée (ΔNEstpx), dans lequel, si la température de moteur (THW) est supérieure ou égale à la température prédéterminée (THW1) au démarrage du moteur (2), le moyen (30) de commande de calage de l'allumage fixe la valeur prédéterminée (ΔNEstpx) destinée à arrêter la commande de retard de calage de l'allumage à une valeur plus grande que dans le cas où la température de moteur (THW) est plus basse que la température prédéterminée (THW1).

5. Régulateur d'un moteur à combustion interne (2), le régulateur comprenant un moyen (30) de commande de calage de l'allumage, dans lequel, au démarrage du moteur (2), le moyen (30) de commande de calage de l'allumage exécute une commande de retard du calage de l'allumage destinée à retarder le calage de l'allumage par rapport au calage de l'allumage au ralenti (θidle) du moteur (2), dans lequel, lorsque la commande de retard du calage de l'allumage est en cours d'exécution, le moyen (30) de commande de calage de l'allumage arrête la commande de retard du calage de l'allumage et exécute une commande d'avance du calage de l'allumage destinée à avancer le calage de l'allumage à condition que la vitesse de moteur (NE) devienne inférieure ou égale à une vitesse de moteur cible de ralenti (NEidle) et que le niveau de différence entre la vitesse de moteur (NE) et la vitesse de moteur cible de ralenti (NEidle) devienne supérieur ou égal à une valeur prédéterminée (ΔNEstp1),
le régulateur étant **caractérisé en ce que**, si la température de moteur (THW) est élevée au démarrage du moteur (2), le moyen (30) de commande de calage de l'allumage fixe le niveau d'avance (Δθx) dans la commande d'avance de calage de l'allumage à une valeur plus petite que dans le cas où la température de moteur (THW) est basse.

6. Régulateur de moteur à combustion interne (2) selon la revendication 5, **caractérisé par** un moyen (30) de commande d'injection de carburant, dans lequel, si la température de moteur (THW) est supérieure ou égale à une température prédéterminée (THW1) au démarrage du moteur (2), le moyen (30) de commande d'injection de carburant arrête l'injection de carburant à condition que la vitesse de moteur (NE) devienne supérieure ou égale à une vitesse prédéterminée (NEhg), et
dans lequel, si la température de moteur (THW) est supérieure ou égale à la température prédéterminée (THW1), le moyen (30) de commande de calage de l'allumage fixe le niveau d'avance (Δθx) dans la commande d'avance de calage de l'allumage à un niveau plus petit que dans le cas où la température de moteur (THW) est plus basse que la température prédéterminée (THW1).

7. Régulateur de moteur à combustion interne (2) selon la revendication 6, **caractérisé en ce que** le moyen (30) de commande de calage de l'allumage fixe la valeur prédéterminée (ΔNEstp1) destinée à arrêter la commande de retard de calage de l'allumage en fonction du niveau d'avance (Δθx) dans la commande d'avance de calage de l'allumage.

8. Régulateur de moteur à combustion interne (2) selon l'une quelconque des revendications 5 à 7, **caractérisé en ce que**, lorsque la commande de retard de calage de l'allumage est en cours d'exécution, le moyen (30) de commande de calage de l'allumage arrête la commande de retard de calage de l'allumage et exécute la commande d'avance de calage de l'allumage à condition que la vitesse de moteur (NE) devienne inférieure ou égale à la vitesse de moteur cible de ralenti (NEidle) et que la différence entre la vitesse de moteur (NE) et la vitesse de moteur cible de ralenti (NEidle) devienne supérieure ou égale à une valeur prédéterminée (ΔNEstp1), dans lequel, si la température de moteur (THW) est supérieure ou égale à la température prédéterminée (THW1) au démarrage du moteur (2), le moyen (30) de commande de calage de l'allumage fixe la valeur prédéterminée (ΔNEstp1) destinée à arrêter la commande de retard de calage de l'allumage à une valeur plus grande que dans le cas où la température de moteur (THW) est plus basse que la température prédéterminée (THW1).
